(19) Europäisches Patentamt
European Patent Office
Office européen des brevets

(11) **EP 2 655 166 B1**

(12) **EUROPÄISCHE PATENTSCHRIFT**

(45) Veröffentlichungstag und Bekanntmachung des Hinweises auf die Patenterteilung:
**24.05.2017 Patentblatt 2017/21**

(21) Anmeldenummer: **11793426.5**

(22) Anmeldetag: **06.12.2011**

(51) Int Cl.:
*B62D 15/02* (2006.01)     *B60W 10/04* (2006.01)
*B60W 10/184* (2012.01)     *B60W 10/20* (2006.01)
*B60W 30/06* (2006.01)

(86) Internationale Anmeldenummer:
**PCT/EP2011/071949**

(87) Internationale Veröffentlichungsnummer:
**WO 2012/084502 (28.06.2012 Gazette 2012/26)**

(54) **VERFAHREN ZUM EINPARKEN ODER MANÖVRIEREN EINES KRAFTFAHRZEUGS MIT NIEDRIGER GESCHWINDIGKEIT UND VORRICHTUNG ZUR DURCHFÜHRUNG DESSELBEN**

METHOD FOR PARKING OR MANEUVERING A MOTOR VEHICLE AT LOW SPEED AND DEVICE FOR CARRYING OUT THE SAME

PROCÉDÉ POUR GARER OU MAN UVRER UN VÉHICULE AUTOMOBILE À BASSE VITESSE ET DISPOSITIF POUR LA MISE EN UVRE DE CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010 DE 102010063840**

(43) Veröffentlichungstag der Anmeldung:
**30.10.2013 Patentblatt 2013/44**

(73) Patentinhaber: **Robert Bosch GmbH**
**70442 Stuttgart (DE)**

(72) Erfinder:
• **BECKER, Markus**
**71732 Tamm (DE)**
• **NIEMZ, Volker**
**71277 Rutesheim (DE)**

(56) Entgegenhaltungen:
**WO-A1-2009/121534     DE-A1-102007 004 972**
**DE-A1-102007 055 390     DE-A1-102008 027 779**

EP 2 655 166 B1

**Beschreibung**

Die Erfindung bezieht sich auf ein Verfahren zum Einparken oder zum Manövrieren eines Kraftfahrzeugs bei niedriger Geschwindigkeit sowie auf eine Vorrichtung zur Durchführung desselben nach dem Oberbegriff der unabhängigen Patentansprüche.

Stand der Technik

Aufgrund der kontinuierlich ansteigenden Verkehrsdichte auf den weltweiten Straßennetzen, insbesondere in Ballungszentren, werden an die Fahrer von Kraftfahrzeugen hohe Anforderungen hinsichtlich eines sicheren Agierens gestellt. Daher wächst die Bedeutung von Systemen, die die Führer von Kraftfahrzeugen bei einem Manövrieren mit langsamer Geschwindigkeit, beispielsweise bei beengten Straßenverhältnissen oder in Parkhäusern bei einem kollisionsfreien Fahren zu unterstützen. Es haben sich daher am Markt zunehmend Systeme etabliert, die ein Einparken oder ein Manövrieren bei langsamer Geschwindigkeit beispielsweise dahingehend unterstützen, dass während des Einparkens beziehungsweise Manövriervorgangs Lenkhinweise gegeben oder die Lenkung eines Kraftfahrzeugs vollautomatisch erfolgt. Diese sogenannte automatische Querführung basiert zunächst auf einer Detektion von Objekten im Umfeld des Kraftfahrzeugs und einer nachfolgenden Berechnung einer Sollfahrtroute des Kraftfahrzeugs zum Erreichen des gewünschten Ziels, die auch als Soll-Trajektorie bezeichnet wird.

Diesbezüglich ist beispielsweise aus der WO 08/104488 A1 ein Verfahren zum kollisionsfreien Einparken bekannt, bei dem unter anderem der seitliche Abstand zu Umfeldobjekten erfasst wird. Dem eigentlichen Manövriervorgang wird u.a. ein Orientierungsfeld zugrunde gelegt, das eine Sollorientierung in Abhängigkeit vom Ort des Fahrzeugs und vom Abstand in Bezug auf ein Umfeldobjekt definiert. Es ergeben sich allerdings Probleme, eine Soll-Trajektorie eines Kraftfahrzeugs mittels dem in der WO 08/104488 A1 vorgeschlagenen Verfahren dann zu berechnen, wenn die Detektion von Umfeldobjekten unvollständig ist, was aufgrund der beschränkten Sicht der jeweiligen Kraftfahrzeugsensorik ein häufig auftretender Fall ist. Die Folge ist ein vermehrter Abbruch eines zunächst eingeleiteten Einpark- oder Manövrierverfahrens des Kraftfahrzeugs.

Die DE 2008 027 779 A1 offenbart ein Verfahren gemäß dem Oberbegriff des Anspruchs 1.

Offenbarung der Erfindung

Aufgabe der vorliegenden Erfindung ist es, ein Verfahren beziehungsweise eine Vorrichtung zur Durchführung desselben vorzuschlagen, die bei beengten Straßenverhältnissen ein kollisionsfreies Einparken beziehungsweise Manövrieren des Kraftfahrzeugs mit niedriger Geschwindigkeit zuverlässig gewährleisten. Unter einer niedrigen Geschwindigkeit wird im Kontext dieser Erfindung eine Geschwindigkeit von < 20 km/h verstanden.

Vorteile der Erfindung

Die der Erfindung zugrundeliegende Aufgabe wird in vorteilhafter Weise durch ein Verfahren und durch eine Vorrichtung zur Durchführung desselben mit den kennzeichnenden Merkmalen der unabhängigen Patentansprüche gelöst.

Dies beruht insbesondere darauf, dass gemäß dem erfindungsgemäßen Verfahren auf der Basis einer Detektion mindestens eines Umfeldobjekts und einer darauf basierenden Berechnung einer Soll-Trajektorie des Kraftfahrzeugs ein Einpark- oder Manövriervorgangs des Kraftfahrzeugs vorgenommen wird, gleichzeitig jedoch der Abstand des Kraftfahrzeugs zu dem detektierten mindestens einen Umfeldobjekt kontinuierlich überprüft wird hinsichtlich eines Unterschreitens eines vorher festgelegten Mindestabstands. Wird dieser Mindestabstand unterschritten, so wird vorteilhafterweise kontinuierlich überprüft, ob am jeweiligen Wegpunkt des Kraftfahrzeugs eine Unterschreitung des Mindestabstands noch vorliegt und ggf. in welchem Ausmaß sie vorliegt. In Abhängigkeit vom Ausmaß der Unterschreitung wird der Lenkwinkel des Kraftfahrzeugs so verändert, dass sich der Einscherradius des Kraftfahrzeugs bspw. kontinuierlich vergrößert. Auf diese Weise ist gewährleistet, dass es nicht zu einer Kollision des Kraftfahrzeugs mit dem detektierten mindestens einen Umfeldobjekt kommt. Der generelle Vorteil bei dieser Verfahrensweise besteht aber darin, dass das Kraftfahrzeug aufgrund der flexiblen Anpassung des Einscherradius des Kraftfahrzeugs während des Einpark- bzw. Manövervorgangs verhältnismäßig nahe an der ursprünglich berechneten Soll-Trajektorie gehalten werden kann und es somit deutlich seltener zu einem Abbruch des Einpark- bzw. Manövriervorganges kommt.

Weitere vorteilhafte Ausführungsformen der vorliegenden Erfindung sind Gegenstand der Unteransprüche.

So ist es von Vorteil, wenn der Einscherradius des Kraftfahrzeugs während des Einpark- bzw. Manövriervorgangs in dem Maße vergrößert wird, wie sich der Abstand zwischen dem zumindest einen detektierten Umfeldobjekt und dem Kraftfahrzeug nach Unterschreiten eines Mindestabstands verringert. So kann beispielsweise der Einscherradius des Kraftfahrzeugs so korrigiert werden, dass die Summe aus Einscherradius und Abstand zwischen Kraftfahrzeug und Umweltobjekt während einer Unterschreitung des Mindestabstands konstant gehalten wird. Dies ermöglicht ein kollisionsfreies Manövrieren des Kraftfahrzeugs annähernd entlang der ursprünglichen Soll-Trajektorie bei einem geringen Berechnungs- bzw. Steuerungsaufwand.

Weiterhin ist von Vorteil, wenn entweder kontinuierlich während der Unterschreitung eines Mindestabstandes oder nach abgeschlossener Unterschreitung des Mindestabstands die Soll-Trajektorie des Fahrzeugs erneut berechnet wird, da insbesondere dann frühzeitig erkennbar wird, ob die ursprünglich angestrebte Fahrzeugposition noch erreichbar ist und ob gegebenenfalls zusätzliche Fahrzüge des Kraftfahrzeugs eingeplant werden müssen. Unter einem Fahrzug wird dabei die Bewegung eines Kraftfahrzeugs zwischen zwei Anhaltepunkten gegebenenfalls verbunden mit einem Richtungswechsel verstanden.

Bei einer besonders vorteilhaften Ausführungsform der vorliegenden Erfindung wird eine Lenkassistenz nach Detektion eines Umfeldobjekts bei einem Einparken in eine aktuell ausgewählte Parklücke oder beim Manövrieren mit niedriger Geschwindigkeit in der aktuellen Fahrsituation nur dann angeboten, wenn die einer berechneten Soll-Trajektorie zuzuordnende Erwartungsüberdeckung des Kraftfahrzeugs mit dem Umweltobjekt bei einem Manövrieren entlang der Soll-Trajektorie einen Maximalwert nicht überschreitet. Als Erwartungsüberdeckung des Kraftfahrzeugs mit einem Umweltobjekt wird derjenige Anteil der Grundfläche des Kraftfahrzeugs herangezogen, der bei einer hypothetischen Bewegung des Kraftfahrzeugs entlang der Soll-Trajektorie Überschneidungen mit zumindest einem Teilbereich des detektieren Umfeldobjekts zeigen würde. Diesem Vorgehen liegt die Vermutung zugrunde, dass es umso schwieriger werden dürfte, eine auf der Basis der Detektion des Umfeldobjekts berechnete korrigierte Trajektorie vorzuschlagen, die dennoch ein erfolgreiches Einparken bzw. Manövrieren mit niedriger Geschwindigkeit zulassen würde, je höher die Erwartungsüberdeckung des Kraftfahrzeugs mit den Umweltobjekten ausfällt.

Kurze Beschreibung der Zeichnung

Ausführungsbeispiele der Erfindung sind in der Zeichnung dargestellt und in der nachfolgenden Beschreibung näher erläutert. So zeigt:

Figur 1    schematisch eine Einparksituation eines Kraftfahrzeugs in einer Aufsicht zur Verdeutlichung des erfindungsgemäßen Verfahrens,

Figur 2    eine mögliche Relation des Einscherradius des Kraftfahrzeugs zu dem Abstand des Fahrzeugs zu einem detektierten Umfeldobjekt und

Figur 3    eine schematische Verdeutlichung des erfindungsgemäßen Verfahrens hinsichtlich des Entscheidungskriteriums, ob ein geplantes Fahrmanöver angeboten werden soll oder nicht.

Ausführungsform der Erfindung

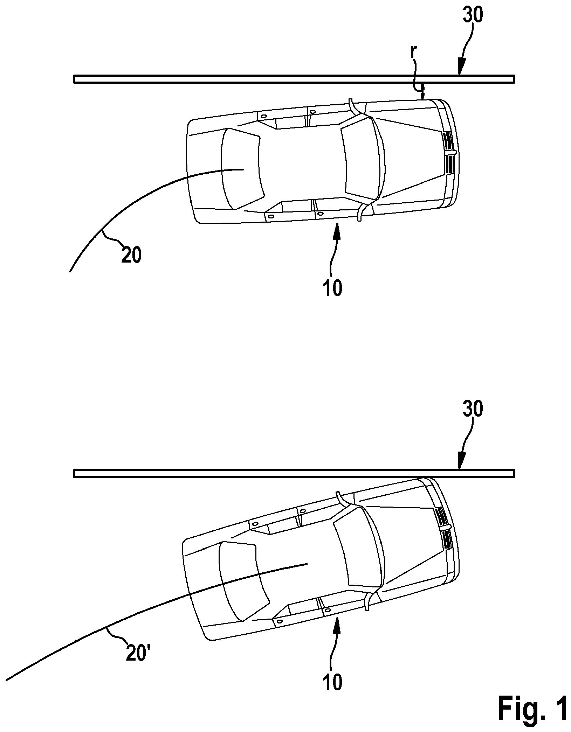

In Figur 1 ist eine dem erfindungsgemäßen Verfahren zugrundeliegende Fahrzeugsituation bei einem Einparken bzw. Manövrieren eines Kraftfahrzeugs mit niedriger Geschwindigkeit gezeigt. Dabei ist für das Kraftfahrzeug 10 beispielsweise eine Einparktrajektorie 20 von einer hier nicht gezeigten kraftfahrzeugeigenen Steuereinheit berechnet worden. Der Berechnung der Soll-Trajektorie 20 liegt zum einen die Erfassung eines geeigneten Parkraums beispielsweise mittels Sensoren zugrunde, die an der Außenperipherie des Kraftfahrzeugs angebracht sind und beispielsweise als Ultraschallsensoren, Radarsensoren, LIDAR-Sensoren oder in Form von Kameras ausgebildet sind. Weiterhin wird über die Sensoren des Kraftfahrzeugs ein Umfeldobjekt 30 detektiert. Bei diesem handelt es sich bei dem in Figur 1 dargestellten Fall beispielsweise um eine Seitenbegrenzung der Fahrbahn, die beispielsweise in Form eines Bordsteins, einer Mauer oder einer Reihe parkender Fahrzeuge vorliegen kann. Das Fahrzeug wird entlang der Soll-Trajektorie 20 bewegt, indem entweder dem Fahrer des Kraftfahrzeugs entsprechende Lenkhinweise gegeben werden oder die Lenkung des Kraftfahrzeugs während des Einpark- oder Manövriervorgangs vollautomatisch erfolgt. Optional kann über die sogenannte automatische Querführung hinaus auch die Längsführung des Fahrzeugs entweder über Fahranweisungen an den Fahrer zur Betätigung von Brems- bzw. Gaspedal oder vollautomatisch erfolgen.

Während das Fahrzeug 10 der Soll-Trajektorie 20 folgt, wird mittels der fahrzeugeigenen Sensorik der Abstand des Fahrzeugs 10 zu dem Umfeldobjekt 30 vorzugsweise kontinuierlich verfolgt. Unterschreitet der Abstand, der als kleinster Abstand zwischen einem Außenbereich des Kraftfahrzeugs und einem Außenbereich des Umfeldobjekts 30 definiert ist, einen vorgegebenen Mindestabstand, so erfolgt erfindungsgemäß eine Korrektur des Einscherradius des Fahrzeugs durch entsprechende Betätigung der Lenkung unter Veränderung des Lenkwinkels.

Eine solche Situation ist in der rechten Abbildung der Figur 1 dargestellt. Hier ist der Mindestabstand zwischen Kraftfahrzeug und Umfeldobjekt annähernd 0 und es wird erkennbar, dass das Fahrzeug einer korrigierten Soll-Trajektorie 20' folgt, wobei der aktuelle Einscherradius des Kraftfahrzeugs deutlich größer ist, als im Rahmen der ursprünglich berechneten Soll-Trajektorie 20. Auf diese Weise wird eine Kollision des Kraftfahrzeugs 10 mit dem Umfeldobjekt 30 wirkungsvoll vermieden.

Es ist bevorzugt vorgesehen, dass eine Korrektur der Soll-Trajektorie 20 in Form einer korrigierten Soll-Trajektorie 20' erfolgt, sobald ein Unterschreiten des Mindestabstand zwischen Kraftfahrzeug 10 und Umfeldobjekt 30 vorliegt. Dabei ist die Soll-Trajektorie 20' so ausgeführt, dass der Einscherradius des Kraftfahrzeugs vorzugsweise kontinuierlich so korrigiert wird, dass einerseits eine Kollision des Kraftfahrzeugs 10 mit dem Umfeldobjekt 30 vermieden wird und andererseits das Kraftfahrzeug möglichst eng der ursprünglich Soll-Trajektorie 20 folgt. Dies führt im überwiegenden Teil der Fälle dazu, dass bei Unterschreiten des Mindestabstands zwischen Kraftfahrzeug 10 und Umfeldobjekt 30 zunächst ein deutlich größerer Einscherradius des Kraftfahrzeugs berechnet wird und, sobald sich der Abstand des Kraftfahrzeugs 10 zum Umfeldobjekt 30 wieder vergrößert, ein dazu korrelierender kleinerer Einscherradius des Kraftfahrzeugs.

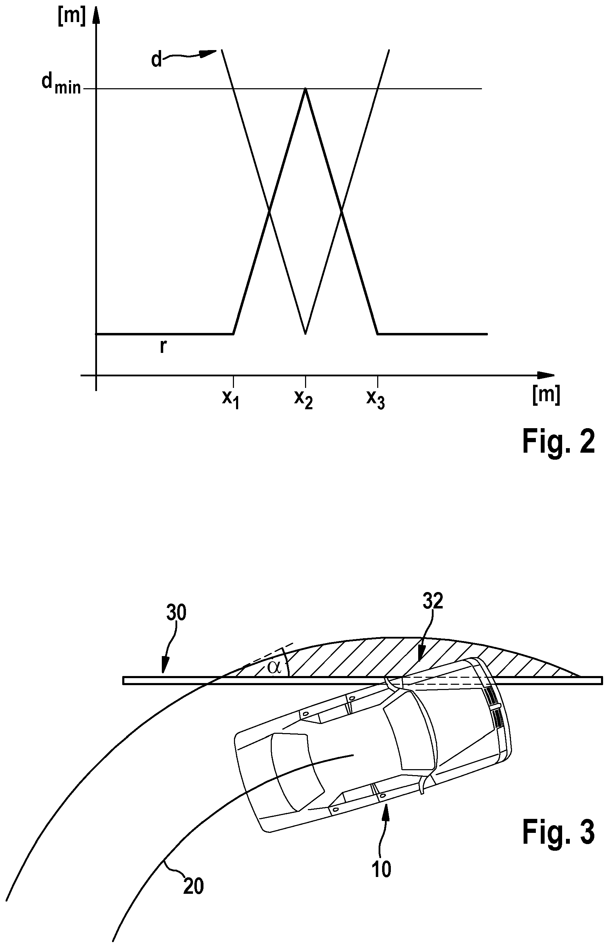

Ein entsprechendes Ausführungsbeispiel der zugrundeliegenden Berechnung eines Einscherradius des Kraftfahrzeugs 10 in Bezug auf den Abstand des Kraftfahrzeugs 10 zu dem Umfeldobjekt 30 ist in Figur 2 dargestellt. Figur 2 zeigt eine Auftragung des Abstands zwischen Kraftfahrzeug 10 zu dem Umfeldobjekt 30 bzw. des Einscherradius in Metern über der bereits zurückgelegten Strecke des Fahrzeugs ebenfalls in Metern.

Aus der Auftragung gemäß Figur 2 ist erkennbar, dass bis zu einer Position x1 der Abstand d zwischen Kraftfahrzeug 10 und Umfeldobjekt 30 ausreichend groß ist und ein für den Vollzug der Soll-Trajektorie 20 erforderlicher Einscherradius des Kraftfahrzeugs r ausreichend gering gewählt werden kann. An der Position x1 kommt es zu einer Unterschreitung eines Mindestabstands dmin zwischen Kraftfahrzeug 10 und Umfeldobjekt 30 und im gleichen Maße wie sich der Abstand d verringert wird in diesem Ausführungsbeispiel der Einscherradius r des Kraftfahrzeugs 10 vergrößert.

Nach dem Passieren des dem Kraftfahrzeug 10 nächstkommenden Peripherieabschnitts des Umfeldobjekts 30 an der Position x2 vergrößert sich der Abstand d des Kraftfahrzeugs 10 zu dem Umfeldobjekt 30, bis er bei der Position x3 den Mindestabstand dmin zwischen Kraftfahrzeug 10 und Umfeldobjekt 30 wieder übersteigt. Vorzugsweise im gleichen Maße wird der Einscherradius des Kraftfahrzeugs 10 nach dem Erreichen der Position x2 wieder verringert und erreicht bei der Position x3 den ursprünglichen Wert.

Bei dem in Figur 2 dargestellten Beispiel kann auf der Basis des gemessenen Abstandes des Fahrzeugs 10 zum Umweltobjekt 30 der einzuhaltende Einscherradius r berechnet werden, indem die Summe aus Seitenabstand d und Einscherradius r im Zeitpunkt x1 gebildet und diese bis zum Erreichen der Position x3 konstant gehalten wird. Hier sind jedoch je nach Fahrzeuggegebenheit auch alternative Berechnungsformen möglich.

So kann der einzuschlagende Einscherradius r auch mittels einer Geradengleichung gemäß r = d * k berechnet werden, wobei es sich bei k um eine geeignete Konstante handelt.

Eine weitere Berechnungsform besteht darin, als Abstand d den Abstand zwischen dem Umweltobjekt 30 und der dem Umweltobjekt 30 zugewandten, in Fahrrichtung gesehen vorderen Fahrzeugecke zu betrachten und dabei den Einscherradius so zu wählen, dass der Abstand $d \geq$ dem Mindestabstand dmin ist. Da in Abhängigkeit des gewählten Einscherradius des Fahrzeugs ein Einscherradius der dem Umweltobjekt 30 zugewandten, in Fahrrichtung gesehen vorderen Fahrzeugecke gemäß der Formel:

$$\text{Einscherradius (Fahrzeugecke)} = \sqrt{[(\text{Einscherradius des Fahrzeugs} + \text{halbe Fahrzeugbreite})^2 + (\text{Abstand der Hinterachse zur Fahrzeugfront})^2]}$$

berechnet werden kann, ergibt sich aus der Bedingung, dass $d \geq$ dmin ein Mindesteinscherradius der Fahrzeugecke, der durch Wahl des Einscherradius des Fahrzeugs eingestellt werden kann. Als Reglersystem kann bspw. ein P-Regler herangezogen werden, der bei Unterschreitung des Mindestabstands dmin eine Vergrößerung des Einscherradius vollzieht, bis der Mindestabstand dmin unter Berücksichtigung einer möglichen Hysterese eingehalten wird.

Da das Kraftfahrzeug 10 beim Erreichen der Position x3 gegebenenfalls eine deutliche Abweichung in Bezug auf die ursprüngliche Soll-Trajektorie 20 zeigt und somit gegebenenfalls bei Weiterverfolgung der für die ursprüngliche Soll-Trajektorie 20 berechneten Lenk- und Fahrparameter nicht mehr den gewünschten Einparkort bzw. die gewünschte Fahrzeugposition erreichen würde, wird vorzugsweise nach Erreichen der Position x3 eine Neuberechnung einer Soll-Trajektorie 20 vorgenommen und das Fahrzeug entlang dieser geführt. Alternativ dazu kann die Neuberechnung einer Soll-Trajektorie 20 auch bereits ab der Position x1 und somit während der Unterschreitung des Mindestabstands zwischen Kraftfahrzeug 10 und Umfeldobjekt 30 erfolgen.

Dies bietet sich insbesondere dann an, wenn das Umfeldobjekt 30 zu einem frühen Zeitpunkt beispielsweise vor Erreichen der Position x1 beziehungsweise x3 von der fahrzeugeigenen Sensorik nicht vollständig erfasst werden kann. Da jedoch die Wahrscheinlichkeit hoch ist, dass spätestens an der Position x2 eine ausreichende Datenlage in Bezug auf Position, Größe und Höhe des Umfeldobjekts 30 durch die fahrzeugeigene Sensorik gewährleistet werden kann, ist eine Neuberechnung der Soll-Trajektorie 20 bereits zu einem Zeitpunkt vor Erreichen der Position x3 sinnvoll und wird daher beispielsweise kontinuierlich nach Erreichen der Position x1 bis zum Erreichen der Position x3 durchgeführt. Gegebenenfalls kann die Neuberechnung der Soll-Trajektorie 20 eine größere Anzahl an Fahrzügen bis zum Erreichen der gewünschten Fahrzeugendposition nötig machen.

Hier scheint es wünschenswert, das bereits zu einem frühen Zeitpunkt gegebenenfalls bereits an der Startposition das Einpark-Manövers beziehungsweise des Manövers mit niedriger Geschwindigkeit eine Entscheidung getroffen werden kann, ob ein ausgewählter Parkraum beziehungsweise eine Fahrzeugendposition unter Beachtung einer Höchstanzahl von Fahrzügen erreicht werden kann. Ein entsprechendes Kriterium hierfür ist in Figur 3 dargestellt. Es bezeichnen im weiteren gleiche Bezugszeichen gleiche Zeichnungsmerkmale wie in den Figuren 1 und 2.

Demzufolge wird bereits zu einem frühen Zeitpunkt, beispielsweise an einem Startpunkt des Einpark- bzw. Manövriervorgangs oder zu einem Zeitpunkt bis zum Erreichen der Position x1 beziehungsweise x2 entschieden, ob ein Einpark- bzw. Manövriervorgang angeboten werden soll. Als Kriterium hierfür wird herangezogen, inwieweit es zu einer hypothetischen Überdeckung des Kraftfahrzeugs 10 mit Bereichen des Umfeldobjekts 30 kommen würde, wenn das Kraftfahrzeug 10 entlang der ursprünglich berechneten Soll-Trajektorie 20 geführt wird. Diese hypothetische Überdeckung wird im Weiteren als Erwartungsüberdeckung bezeichnet und ist in Figur 3 als schraffierter Bereich 32 dargestellt.

Als Erwartungsüberdeckung des Kraftfahrzeugs 10 mit einem Umweltobjekt 30 kann der Schnittwinkel $\alpha$ herangezogen werden, der einerseits durch den Kreisbogen beschrieben wird, den eine das Umfeldobjekt 30 überdeckende Außenecke des Kraftfahrzeugs 10 beim Abfahren der Soll-Trajektorie 20 beschreiben würde, und andererseits durch eine der Fahrbahn parallele Längserstreckung des Umfeldobjekts 30.

Alternativ kann die Erwartungsüberdeckung des Kraftfahrzeugs 10 mit einem Umweltobjekt 30 durch denjenigen Anteil der Grundfläche des Kraftfahrzeugs definiert werden, der bei einer hypothetischen Bewegung des Kraftfahrzeugs entlang der Soll-Trajektorie Überschneidungen mit zumindest einem Teilbereich des detektieren Umfeldobjekts zeigen würde.

Überschreitet die Erwartungsüberdeckung einen vorher festgelegten Schnittwinkel $\alpha$ bzw. einen bspw. prozentualen Anteil an der Gesamtgrundfläche des Kraftfahrzeugs 10, wird das entsprechende Fahrmanöver nicht oder nur unter gleichzeitige Einblendung eines Warnhinweises angeboten.

Auf diese Weise kann zu einem frühen Zeitpunkt bereits entschieden werden, ob dem Fahrer eines Kraftfahrzeugs ein entsprechender Parkraum bzw. eine gewünschte Fahrzeugposition auf Basis eines Manövrierens mit niedriger Geschwindigkeit angeboten werden soll.

Im Rahmen der Erfindung werden sowohl Umfeldobjekte auf derselben Fahrbahnseite berücksichtigt, auf der sich auch eine anzufahrende Parklücke beziehungsweise Fahrzeugposition befindet, als insbesondere auch Umfeldobjekte auf einer gegenüberliegenden Straßenseite. Letzteres hat insbesondere beim Befahren verengter Straßen eine hohe Bedeutung.

**Patentansprüche**

1. Verfahren zum Einparken oder Manövrieren bei niedriger Geschwindigkeit eines Kraftfahrzeugs, wobei mindestens ein Umfeldobjekt des Kraftfahrzeugs erfasst und zur Berechnung einer Soll-Trajektorie des Kraftfahrzeugs herangezogen wird und wobei das Kraftfahrzeug entsprechend der Soll-Trajektorie automatisch gelenkt oder dem Fahrer des Kraftfahrzeugs entsprechende Lenkhinweise gegeben werden, und wobei bei Unterschreitung eines Mindestabstandes (dmin) des Kraftfahrzeugs (10) zu dem mindestens einen detektierten Umfeldobjekt (30) der Einscherradius (r) des Kraftfahrzeugs in Abhängigkeit von dem Abstand (d) zwischen dem Kraftfahrzeug (10) und dem mindestens einen Umfeldobjekt (30) nachgeführt wird, bis der Abstand (d) den Mindestabstand (dmin) wieder überschreitet, **dadurch gekennzeichnet, dass** bei Unterschreiten des Mindestabstandes (dmin) der Einscherradius (r) des Kraftfahrzeugs (10) so gewählt wird, dass die Summe aus dem Einscherradius (r) und dem Abstand (d) zwischen dem Kraftfahrzeug (10) und dem mindestens einen Umfeldobjekt (30) eine Konstante ergibt.

2. Verfahren nach Anspruch 1, **dadurch gekennzeichnet, dass** bei Unterschreiten des Mindestabstands (dmin) der Einscherradius (r) des Kraftfahrzeugs (10) desto größer gewählt wird, je kleiner der Abstand (d) zwischen dem Kraftfahrzeug (10) und dem mindestens einen detektierten Umfeldobjekt (30) ist.

3. Verfahren nach einem der Ansprüche 1 bis 2, **dadurch gekennzeichnet, dass** bei Unterschreiten eines Mindestabstandes (dmin) kontinuierlich eine Nachberechnung der Soll-Trajektorie (20) des Kraftfahrzeugs (10) vorgenommen wird.

4. Verfahren nach einem der Ansprüche 1 bis 3, **dadurch gekennzeichnet, dass** nach einer zunächst auftretenden Unterschreitung des Mindestabstandes (dmin) bei einer nachfolgend auftretenden Überschreitung des Mindestabstandes (dmin) eine Neuberechnung der Soll-Trajektorie (20) des Kraftfahrzeugs (10) vorgenommen wird.

**5.** Verfahren nach einem der vorhergehenden Ansprüchen, **dadurch gekennzeichnet, dass** eine Lenkassistenz bei einem Einparken in eine aktuell ausgewählte Parklücke oder beim Manövrieren mit niedriger Geschwindigkeit in der aktuellen Fahrsituation nur dann angeboten wird, wenn die einer berechneten Soll-Trajektorie (20) zuzuordnende Erwartungsüberdeckung des Kraftfahrzeugs mit dem mindestens einen detektierten Umweltobjekt (30) bei einem Manövrieren entlang der Soll-Trajektorie (20) einen Maximalwert nicht überschreitet, wobei als Erwartungsüberdeckung des Kraftfahrzeugs 10 mit einem Umweltobjekt 30 die Höhe eines Schnittwinkels ($\alpha$) herangezogen wird, der einerseits durch einen Kreisbogen gebildet wird, den eine das Umfeldobjekt (30) überdeckende Außenecke des Kraftfahrzeugs (10) beim Abfahren der Soll-Trajektorie (20) beschreiben würde, und andererseits durch eine Längsausstreckung des Umfeldobjekts (30).

**6.** Verfahren nach einem der vorhergehenden Ansprüchen, **dadurch gekennzeichnet, dass** eine Lenkassistenz bei einem Einparken in eine aktuell ausgewählte Parklücke oder beim Manövrieren mit niedriger Geschwindigkeit in der aktuellen Fahrsituation nur dann angeboten wird, wenn die einer berechneten Soll-Trajektorie (20) zuzuordnende Erwartungsüberdeckung des Kraftfahrzeugs (10) mit dem mindestens einen detektierten Umweltobjekt (30) bei einem Manövrieren entlang der Soll-Trajektorie (20) einen Maximalwert nicht überschreitet, wobei als Erwartungsüberdeckung des Kraftfahrzeugs mit dem mindestens einen detektierten Umweltobjekt (30) der Anteil (32) der Grundfläche des Kraftfahrzeugs (10) herangezogen wird, der bei einer hypothetischen Bewegung des Kraftfahrzeugs (10) entlang der Soll-Trajektorie (20) eine Überschneidung mit zumindest einem Teilbereich des mindestens einen detektierten Umfeldobjekts (30) zeigen würde.

**7.** Verfahren nach einem der vorhergehenden Ansprüche, **dadurch gekennzeichnet, dass** ein Einparken des Kraftfahrzeugs (10) in eine aktuell angebotene Parklücke oder ein Manövrieren mit niedriger Geschwindigkeit des Kraftfahrzeugs in der aktuellen Fahrsituation nicht angeboten wird, wenn aufgrund des mindestens einen detektierten Umfeldobjekts (30) eine Maximalanzahl an Fahrzügen überschritten wird.

**8.** Steuereinheit für ein Kraftfahrzeug **gekennzeichnet durch** Mittel zur Ausführung eines Verfahrens nach einem der vorhergehenden Ansprüche.

**9.** Computerprogramm umfassend Programmcodemittel zur Durchführung eines Verfahrens nach einem der Ansprüche 1 bis 7.

## Claims

**1.** Method for parking or manoeuvring a motor vehicle at low speed, wherein at least one object in the surroundings of the motor vehicle is detected and is used to calculate a setpoint trajectory of the motor vehicle, and wherein the motor vehicle is automatically steered according to the setpoint trajectory or corresponding steering instructions are issued to the driver of the motor vehicle, and wherein when a minimum distance (dmin) of the motor vehicle (10) from the at least one detected object (30) in the surroundings is undershot the cut-in radius (r) of the motor vehicle is followed as a function of the distance (d) between the motor vehicle (10) and the at least one object (30) in the surroundings until the distance (d) exceeds the minimum distance (dmin) again, **characterized in that** when the minimum distance (dmin) is undershot the cut-in radius (r) of the motor vehicle (10) is selected such that the sum of the cut-in radius (r) and the distance (d) between the motor vehicle (10) and the at least one object (30) in the surroundings yields a constant.

**2.** Method according to Claim 1, **characterized in that** when the minimum distance (dmin) is undershot the cut-in radius (r) of the motor vehicle (10) is selected with a larger value the smaller the distance (d) between the motor vehicle (10) and the at least one detected object (30) in the surroundings.

**3.** Method according to one of Claims 1 to 2, **characterized in that** when a minimum distance (dmin) is undershot a re-calculation of the setpoint trajectory (20) of the motor vehicle (10) is performed continuously.

**4.** Method according to one of Claims 1 to 3, **characterized in that** after the minimum distance (dmin) has been undershot for the first time when the minimum distance (dmin) is subsequently exceeded a re-calculation of the setpoint trajectory (20) of the motor vehicle (10) is performed.

**5.** Method according to one of the preceding claims, **characterized in that** a steering assistance during parking into a currently selected parking space or during manoeuvring at a low speed in the current driving situation is offered only if the expected congruence, to be assigned to a calculated setpoint trajectory (20), of the motor vehicle with the at least one detected object (30) in the surroundings during manoeuvring along the setpoint trajectory (20) does not exceed a maximum value, wherein the magnitude of an intersection angle ($\alpha$) which is formed, on the one hand, by an arc which an outer corner of the motor vehicle (10) which is congruent with an object (30) in the surroundings would describe when travelling along the setpoint trajectory (20) and, on the other hand, by a longitudinal of the object (30) in the surroundings is used as the expected congruence of the motor vehicle (10) with the object (30) in the surroundings.

**6.** Method according to one of the preceding claims, **characterized in that** a steering assistance during parking into a currently selected parking space or during manoeuvring at a low speed in the current driving situation is offered only if the expected congruence, to be assigned to a calculated setpoint trajectory (20), of the motor vehicle (10) with the at least one detected object (30) in the surroundings during manoeuvring along the setpoint trajectory (20) does not exceed a maximum value, wherein the portion (32) of the base area of the motor vehicle (10) which would indicate an overlap with at least a partial region of the at least one detected object (30) in the surroundings during a hypothetical movement of the motor vehicle (10) along the setpoint trajectory is used as the expected congruence of the motor vehicle with the at least one detected object (30) in the surroundings.

**7.** Method according to one of the preceding claims, **characterized in that** parking of the motor vehicle (10) into a currently offered parking space or manoeuvring at a low speed of the motor vehicle in the current driving situation is not offered if a maximum number of driving movements is exceeded as a result of the at least one detected object (30) in the surroundings.

**8.** Control unit for a motor vehicle **characterized by** means for carrying out a method according to one of the preceding claims.

**9.** Computer program comprising program code means for carrying out a method according to one of Claims 1 to 7.

## Revendications

**1.** Procédé d'entrée en stationnement ou de manoeuvre à basse vitesse d'un véhicule automobile, au moins un objet de l'environnement du véhicule automobile étant détecté et utilisé pour le calcul d'une trajectoire de consigne du véhicule automobile et le véhicule automobile étant dirigé automatiquement conformément à la trajectoire de consigne ou des consignes de direction correspondantes étant données au conducteur du véhicule automobile, et dans le cas où un écart entre le véhicule automobile (10) et l'au moins un objet d'environnement (30) détecté devient inférieur à un écart minimum (dmin), le rayon de rabattage (r) du véhicule automobile en fonction de l'écart (d) entre le véhicule automobile (10) et l'au moins un objet d'environnement (30) est poursuivi jusqu'à ce que l'écart (d) redevient supérieur à l'écart minimum (dmin), **caractérisé en ce que** dans le cas où l'écart devient inférieur à l'écart minimum (dmin), le rayon de rabattage (r) du véhicule automobile (10) est choisi de telle sorte que la somme du rayon de rabattage (r) et de l'écart (d) entre le véhicule automobile (10) et l'au moins un objet d'environnement (30) produit une constante.

**2.** Procédé selon la revendication 1, **caractérisé en ce que** dans le cas où l'écart devient inférieur à l'écart minimum (dmin), le rayon de rabattage (r) du véhicule automobile (10) est choisi d'autant plus grand que l'écart (d) entre le véhicule automobile (10) et l'au moins un objet d'environnement (30) détecté est petit.

**3.** Procédé selon l'une des revendications 1 à 2, **caractérisé en ce que** dans le cas où l'écart devient inférieur à un écart minimum (dmin), un recalcul de la trajectoire de consigne (20) du véhicule automobile (10) est continuellement effectué.

**4.** Procédé selon l'une des revendications 1 à 3, **caractérisé en ce que** dans le cas où l'écart devient tout d'abord inférieur à l'écart minimum (dmin) et que l'écart devient ensuite supérieur à l'écart minimum (dmin), un recalcul de la trajectoire de consigne (20) du véhicule automobile (10) est effectué.

**5.** Procédé selon l'une des revendications précédentes, **caractérisé en ce qu'**une assistance à la direction lors d'une entrée en stationnement dans un emplacement de stationnement actuellement sélectionné ou lors d'une manoeuvre à basse vitesse dans la situation de conduite actuelle n'est proposée que lorsqu'une coïncidence attendue du véhicule automobile avec l'au moins un objet d'environnement (30) détecté, à associer à une trajectoire de consigne (20) calculée, ne dépasse pas une valeur maximale lors d'une manoeuvre le long de la trajectoire de consigne (20), la coïncidence attendue du véhicule automobile 10 avec l'au moins un objet d'environnement (30) utilisée étant la hauteur d'un angle de coupe ($\alpha$) qui est formé d'un côté par un arc de cercle qui décrirait un côté extérieur du véhicule automobile (10) recouvrant l'objet d'environnement (30) lors de la sortie de la trajectoire de consigne (20), et de l'autre côté par une étendue longitudinale de l'objet d'environnement (30).

6. Procédé selon l'une des revendications précédentes, **caractérisé en ce qu'**une assistance à la direction lors d'une entrée en stationnement dans un emplacement de stationnement actuellement sélectionné ou lors d'une manoeuvre à basse vitesse dans la situation de conduite actuelle n'est proposée que lorsque la coïncidence attendue du véhicule automobile (10) avec l'au moins un objet d'environnement (30) détecté, à associer à une trajectoire de consigne (20) calculée, ne dépasse pas une valeur maximale lors d'une manoeuvre le long de la trajectoire de consigne (20), la coïncidence attendue du véhicule automobile avec l'au moins un objet d'environnement (30) détecté utilisée étant la part (32) de la surface de base du véhicule automobile (10) qui, lors d'un mouvement hypothétique du véhicule automobile (10) le long de la trajectoire de consigne (20) présenterait un chevauchement avec au moins une zone partielle de l'au moins un objet d'environnement (30) détecté.

7. Procédé selon l'une des revendications précédentes, **caractérisé en ce qu'**une entrée en stationnement du véhicule automobile (10) dans un emplacement de stationnement actuellement proposé ou une manoeuvre à basse vitesse du véhicule automobile dans la situation de conduite actuelle n'est pas proposée lorsque, du fait de l'au moins un objet d'environnement (30) détecté, un nombre maximum de courses de conduite est dépassé.

8. Unité de commande pour un véhicule automobile, **caractérisée par** des moyens destinés à mettre en oeuvre un procédé selon l'une des revendications précédentes.

9. Programme informatique comprenant des moyens de code de programme destinés à mettre en oeuvre un procédé selon l'une des revendications 1 à 7.

Fig. 1

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 08104488 A1
- DE 2008027779 A1